Europäisches Patentamt

European Patent Office

Office européen des brevets

(19)

(11) Veröffentlichungsnummer : **0 207 267
B1**

(12) **EUROPÄISCHE PATENTSCHRIFT**

(45) Veröffentlichungstag der Patentschrift :
26.04.89

(21) Anmeldenummer : 86106555.5

(22) Anmeldetag : 14.05.86

(51) Int. Cl.⁴ : **B 60 N 1/04**

(54) **Spezial-Fahrgastsitz.**

(30) Priorität : **05.07.85 DE 8519519 U**

(43) Veröffentlichungstag der Anmeldung :
**07.01.87 Patentblatt 87/02**

(45) Bekanntmachung des Hinweises auf die Patenterteilung : **26.04.89 Patentblatt 89/17**

(84) Benannte Vertragsstaaten :
**AT CH DE FR IT LI SE**

(56) Entgegenhaltungen :
**DE–A– 2 548 607
DE–B– 1 240 115**

(73) Patentinhaber : **Ignaz Vogel GmbH & Co KG,
Fahrzeugsitze
Kleinsteinbacher Strasse 42-44
D-7500 Karlsruhe 41-Stu (DE)**

(72) Erfinder : **Vogel, Ignaz, Dipl.-Ing.
Kleinsteinbacher Strasse 44
D-7500 Karlsruhe 41-Stu (DE)**

(74) Vertreter : **Trappenberg, Hans
Postfach 1909
D-7500 Karlsruhe 1 (DE)**

Jouve, 18, rue St-Denis, 75001 Paris, France

## Beschreibung

Die Erfindung betrifft einen Spezial-Fahrgastsitz mit einem fest mit dem Fahrgestell-Aufbau verbundenen Rückenteil und einem am Rückenteil angelenkten, in Richtung auf das Rückenteil hochschwenkbaren Sitzteil, bei dem am Sitzteil über eine Hebelmechanik eine Gasfeder zur Unterstützung der Hochschwenkbewegung angreift.

Derartige Spezial-Fahrgastsitze werden bei Fahrzeugen zur Personenbeförderung benötigt, wo sie unmittelbar beim Einstieg angeordnet sind. Um das Einsteigen der Passagiere zu ermöglichen, muß das Sitzteil an das Rückenteil anliegend, hochgeschwenkt werden, so daß der Durchgang zu den weiteren Fahrgastsitzen freigegeben ist. Dieser Spezial-Fahrgastsitz dient im allgemeinen als Sitz für einen Fahrzeug-Begleiter, der sowieso bei jedem Halt aufstehen und die Passagiere betreuen muß. Das Rückenteil dieses Fahrgastsitzes ist, wie ausgeführt, fest mit dem Aufbau des Fahrzeuges verbunden, also nicht wie die sonstigen Komfort-Fahrgastsitze, in seiner Winkellage verstellbar. Dies rührt einfach daher, daß die Platzverhältnisse an dieser Stelle sehr beengt sind, so daß der Raum für eine verschwenkbare Rückenlehne gar nicht zur Verfügung steht.

Dieses beengten Raumes wegen ist es auch verhältnismäßig schwierig, eine Gasfeder so anzubringen, daß sie zur Unterstützung des Hochklappens dienen kann. Im allgemeinen ist die Möglichkeit nicht gegeben, die Gasfeder zwischen dem Sitzteil und dem Boden des Fahrzeugs beziehungsweise einem etwaigen Untergestell des Spezial-Fahrgastsitzes anzuordnen. Sie muß vielmehr hinter dem Rückenteil untergebracht werden, was eine verhältnismäßig aufwendige Hebelmechanik zur Übertragung der Kraft der Gasfeder beziehungsweise der Gasfedern bedingt. Im allgemeinen wird bei den bekannten Einrichtungen ein Kniehebel-Gelenk vorgesehen, um auf kleinstem Raum diese Kraft übertragen zu können.

Bei sämtlichen Fahrgastsitzen in Passagierfahrzeugen ist darauf zu achten, daß die Sitze weder im belasteten noch im unbelasteten Zustand klappern. Dies trifft selbstverständlich auch für den Spezial-Fahrgastsitz zu, der weder im heruntergeklappten, noch im hochgeschwenkten Zustand Klappergeräusche erzeugen darf. Bei den bekannten Ausführungen ist ein Klappern des Sitzteils im hochgeschwenkten Zustand dadurch vermieden, daß die Gasfeder den Sitzteil an den Rückenteil anpreßt. Im heruntergeklappten Zustand sind diese bekannten Fahrgastsitze stets belastet, so daß dann auch das Sitzteil an einen Anschlag angepreßt wird, also ebenfalls nicht klappern kann.

Im unbelasteten Zustand gehen die bekannten Fahrgastsitze dieser Ausführung stets in die Lage mit hochgeschwenktem Sitzteil. Dies ist dann unangenehm, wenn der Begleiter beziehungsweise Passagier, der auf diesem Fahrgastsitz Platz genommen hat, kurz aufsteht oder auch nur eine kurze Entlastungsbewegung ausführt, da dann unter Umständen bereits der Fahrgastsitz hochschwenkt, vom Passagier also umständlich wieder niedergedrückt werden muß. Außerdem wird durch diese Ausführung auch das Platznehmen bereits erschwert.

Die Erfindung stellt sich die Aufgabe, eine Konstruktion anzugeben, bei der die bisher übliche aufwendige Hebelmechanik zur Übertragung der Kraft der Gasfeder beziehungsweise der Gasfedern auf das Sitzteil entfallen kann und bei der auch der Sitzteil in der heruntergeklappten Lage sicher und klapperfrei gehalten ist. Erreicht wird dies nach der Erfindung dadurch, daß die Hebelmechanik ein bei der Anlenkachse zwischen Sitz- und Rückenteil am Sitzteil angebrachter, etwa in Richtung des Rückenteils verlaufender Hebel ist, an dem die Gasfeder, die an einem fest mit dem Rückenteil verbundenen Konstruktionsteil gelagert ist, in stumpfem Winkel hierzu vom Rückenteil weg verlaufend angelenkt ist.

Durch diese Konstruktion ist bereits die aufwendige Hebelmechanik zum Hochklappen des Sitzteils vermieden, da nun die Gasfeder unmittelbar auf den am Sitzteil befestigten Hebel angreifen und die Hochschwenkbewegung einleiten beziehungsweise unterstützen kann. Werden darüberhinaus einem weiteren Neuerungsmerkmal nach die Extremlagen der Anlenkstelle der Gasfeder am Hebel jeweils an entgegengesetzten Seiten der durch die Lagerung der Gasfeder hindurchgehenden Mittellinie zwischen diesen Extremlagen gelegt, so wirkt die Kraft der Gasfeder bei hochgeschwenktem Sitzteil, so daß dieses Sitzteil an das Rückenteil angepreßt wird, in der entgegengesetzten Ruhelage jedoch so, daß das Sitzteil an einen Anschlag, der die Gebrauchslage des Sitzteils bestimmt, angedrückt wird. Dadurch sind diese beiden Extremlagen stabilisiert, also auch die Gebrauchslage des Sitzes, so daß der auf diesem Fahrgastsitz platznehmende Passagier nicht befürchten muß, daß das Sitzteil bei einer kurzen Entlastung hochklappt. Außerdem ist dadurch, daß die Gasfeder in beiden Extremlagen das Sitzteil an entsprechende Anschläge drückt, vermieden, daß es, sowohl im hochgeklappten wie auch im heruntergeklappten Zustand klappert.

Auf der Zeichnung ist ein Ausführungsbeispiel des Erfindungsgegenstandes schematisch dargestellt und zwar zeigen :

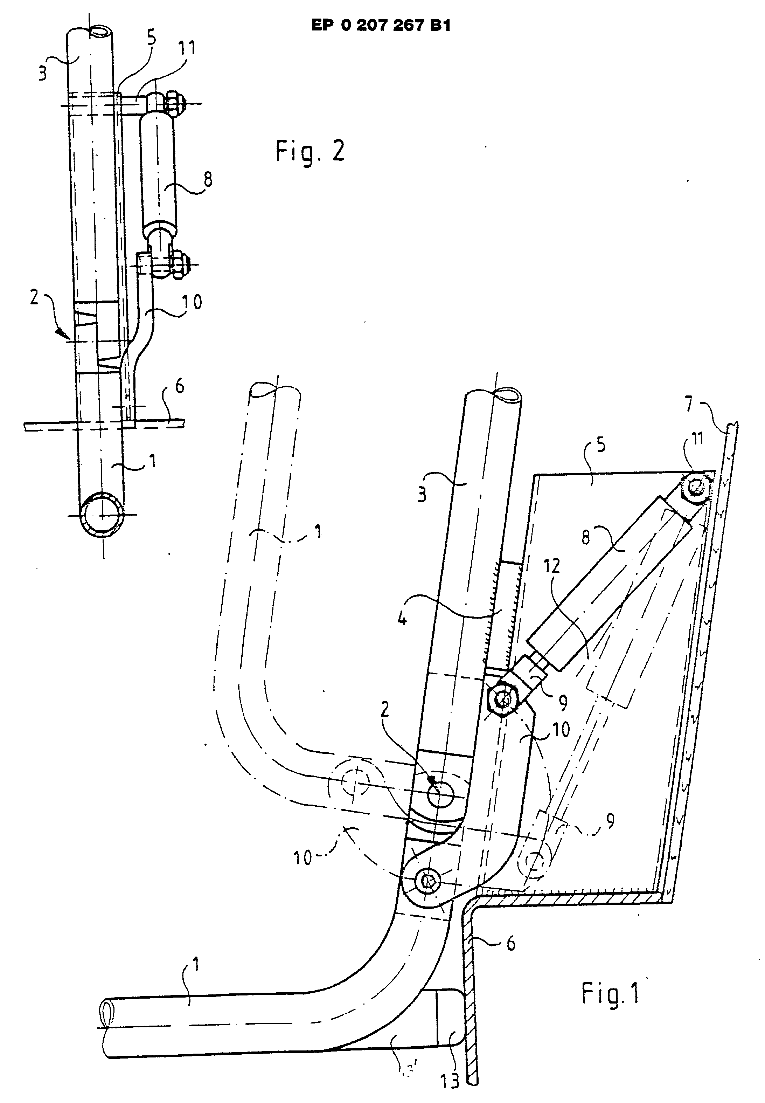

Fig. 1 eine Seitenansicht auf Sitzteil, Rückenteil und Gasfeder und

Fig. 2 eine Frontansicht der Abbildung nach Fig. 1.

Ein Sitzteil 1 ist hochschwenkbar um eine Achse 2 an einem Rückenteil 3 angelenkt. Das Rückenteil 3 ist fest über ein Zwischenstück 4 mit einem Kasten 5 verbunden, der wiederum am Fahrgestell-Aufbau 6 befestigt ist. Rückseitig wird der Aufbau dieses Fahrgastsitzes durch eine Holzblende 7 abgedeckt.

Am Kasten 5 ist eine Gasfeder 8 gelagert, deren Kolben 9 an einem Hebel 10, der fest mit dem Sitzteil 1 verbunden ist, angelenkt ist. Die Anlenkstelle liegt in der gezeichneten Gebrauchslage des Sitzteils 1 auf der einen Seite der durch die Lagerachse 11 hindurchgehenden Mittellinie 12 zwischen den beiden Extremlagen der Gasfeder, wobei die jenseitige Extremlage, mit hochgeschwenktem Sitzteil 1, strichpunktiert eingezeichnet ist. Dadurch wird in der gezeichneten Gebrauchslage des Sitzteils 1 das Sitzteil mit einem Anschlagstück 13', mit Puffer 13, fest an den Fahrgestell-Aufbau 6 angedrückt, also klapperfrei in dieser Lage gehalten. In der jenseitigen Extremlage wird durch die Kraft der Gasfeder 8 die Polsterung des Sitzteils 1 (nicht eingezeichnet) gegen die Polsterung (nicht eingezeichnet) des Rückenteils 3 gepreßt, so daß sich jeweils eine stabile Lage dieses Sitzteils 1 ergibt. Außerdem wird durch die stetig einwirkende Kraft der Gasfeder ein Klappern des Sitzteils in jeder der Extremlagen mit Sicherheit vermieden.

## Patentansprüche

1. Spezial-Fahrgastsitz mit einem fest mit dem Fahrgestell-Aufbau verbundenen Rückenteil und einem am Rückenteil angelenkten, in Richtung auf das Rückenteil hochschwenkbaren Sitzteil, bei dem am Sitzteil über eine Hebelmechanik eine Gasfeder zur Unterstützung der Hochschwenkbewegung angreift, dadurch gekennzeichnet, daß die Hebelmechanik ein bei der Anlenkachse (2) zwischen Sitz- (1) und Rückenteil (3) am Sitzteil (1) angebrachter, etwa in Richtung des Rückenteils (3) verlaufender Hebel (10) ist, an dem die Gasfeder (8), die an einem fest mit dem Rückenteil (3) verbundenen Konstruktionsteil (Kasten 5) gelagert ist, in stumpfem Winkel hierzu vom Rückenteil (3) wegverlaufend angelenkt ist.

2. Fahrgastsitz nach Anspruch 1, dadurch gekennzeichnet, daß die Extremlagen der Anlenkstelle der Gasfeder (8) am Hebel (10) jeweils an entgegengesetzten Seiten der durch die Lagerung (11) der Gasfeder (8) hindurchgehenden Mittellinie (12) zwischen diesen Extremlagen liegen.

3. Fahrgastsitz nach Anspruch 1, dadurch gekennzeichnet, daß das Konstruktionsteil ein fest mit dem Fahrgestell- Aufbau (6) verbundener Kasten (5) ist.

## Claims

1. A special passenger seat comprising a back portion which is fixedly connected to the vehicle structure and a seat portion which is pivotally connected to the back portion and which can be pivoted upwardly towards the back portion, wherein a gas spring engages the seat portion by way of a lever mechanism for promoting the upward pivotal movement, characterised in that the lever mechanism is a lever (10) which is mounted to the seat portion (1) at the pivot axis (2) between the seat portion (1) and the back portion (3) and which extends substantially in the direction of the back portion (3) and to which the gas spring (8) which is mounted on a structural member (box 5) fixedly connected to the back portion (3) is pivotally connected at an acute angle relative thereto, in a position of extending away from the back portion (3).

2. A passenger seat according to claim 1 characterised in that the limit positions of the pivotal connection of the gas spring (8) on the lever (10) are respectively disposed at opposite sides of the centre line (12) passing through the mounting (11) of the gas spring (8), between said limit positions.

3. A passenger seat according to claim 1 characterised in that the structural member is a box (5) fixedly connected to the vehicle structure (6).

## Revendications

1. Siège spécial pour passager comprenant un dossier relié rigidement à la structure du châssis et une assise articulée sur le dossier et pouvant basculer vers le haut en direction du dossier, un ressort pneumatique étant en prise avec l'assise par l'intermédiaire d'un mécanisme à levier pour assister le basculement vers le haut, caractérisé par le fait que le mécanisme à levier est constitué par un levier (10) qui est monté sur l'assise (1) près de l'axe d'articulation (2) de l'assise (1) sur le dossier (3), qui s'étend sensiblement dans la direction du dossier (3), et sur lequel le ressort pneumatique (8), qui est monté sur un élément de structure (caisson 5) relié rigidement au dossier (3), est articulé en s'étendant à partir du dossier (3) sous un angle obtus par rapport à lui.

2. Siège pour passager selon la revendication 1, caractérisé par le fait que les positions extrêmes du point d'articulation du ressort pneumatique (8) sur le levier (10) se trouvent chacune sur des côtés opposés de la ligne médiane (12) qui passe par le palier (11) du ressort pneumatique (8) entre ces positions extrêmes.

3. Siège pour passager selon la revendication 1, caractérisé par le fait que l'élément de structure est un caisson (5) relié rigidement à la structure (6) du châssis.

Fig. 2

Fig.1